# EUROPÄISCHE PATENTANMELDUNG

(11) **EP 3 072 638 A1**
(43) Veröffentlichungstag der Anmeldung: **28.09.2016**
(21) Anmeldenummer: 16000695.3
(22) Anmeldetag: 23.03.2016
(51) Int. Cl.: B24C 1/00, B24C 1/08, B24C 3/02, B24C 7/00

(54) **ENTGRATEN VON FORMTEILEN, INSBESONDERE GUMMI-FORMTEILE**

(30) Priorität: 26.03.2015 DE 102015003942
(71) Anmelder: Linde Aktiengesellschaft, 80331 München (DE)
(72) Erfinder: Schmand, Ralf, 85716 Unterschleißheim (DE); Bomm, Christian, 86450 Altenmünster (DE)
(74) Vertreter: Gellner, Bernd

(57) **Zusammenfassung**

Die Erfindung betrifft ein Verfahren zum Entgraten eines Gummi-Formteiles (2), aufweisend die Schritte: Bereitstellen eines Gummi-Formteiles (2), das einen zu entfernenden Grat (20) aufweist, Kühlen des Grates durch beaufschlagen des Grates mit einem verflüssigtem Gas (4), und Beaufschlagen des Grates mit Trockeneispartikeln zur Entfernung des Grates. Weiterhin betrifft die Erfindung eine entsprechende Einrichtung (1) zum Entgraten von Gummi-Formteilen.

## Beschreibung

Die Erfindung betrifft ein Verfahren zum Entgraten von Formteilen, insbesondere Gummi-Formteilen. Unter einem Gummi-Formteil wird hierbei ein Formteil verstanden, das einen Grat aus einem Gummi aufweist, der insbesondere bei der Herstellung, z.B. Spritzgießen, aufgrund einer Teilung des Gießwerkzeuges bzw. der Gussform, entsteht. Weiterhin werden im Sinne der vorliegenden Erfindung unter dem Begriff Gummi neben Kautschuk, insbesondere vulkanisiertem Kautschuk, sowie synthetischem Kautschuk, sämtliche formfesten, elastisch verformbaren Kunststoffe verstanden, insbesondere Elastomere (z.B. Naturkautschuk oder Silikonkautschuk, siehe oben), thermoplastische Elastomere oder thermoplastische Kunststoffe, wie z.B. PPS.

In der Regel wird bei Formteilen bzw. Gummi-Formteilen eine mechanische Entfernung von Graten vorgenommen. Oftmals wird die Entgratung dabei händisch durchgeführt, z.B. unter Zuhilfenahme von Abreißlaschen am Werkstück, Messern oder Schleifmitteln. Dieser Vorgang ist sehr zeit- und personalaufwändig.

Der vorliegenden Erfindung liegt hiervon ausgehend die Aufgabe zugrunde ein Verfahren sowie eine Einrichtung zum Entgraten von Formteilen, insbesondere Gummi-Formteilen, anzugeben, das bzw. die die vorgenannten Nachteile mindert.

Diese Aufgabe wird durch ein Verfahren mit den Merkmalen des Anspruchs 1 gelöst. Vorteilhafte Ausführungsformen des erfindungsgemäßen Verfahrens sind in den Unteransprüchen angegeben und werden nachfolgend beschrieben.

Gemäß Anspruch 1 sind zumindest die folgenden Schritte vorgesehen:
- Bereitstellen eines Formteiles, das einen zu entfernenden Grat aufweist,
- Kühlen des Grates durch Beaufschlagen des Grates mit einem verflüssigtem Gas, und
- Beaufschlagen des Grates mit Trockeneispartikeln zur Entfernung des Grates.

Bei dem Formteil kann es sich insbesondere um ein Formteil aus einem Gummi handeln (siehe oben) oder um ein Formteil aus einem thermoplastischem Kunststoff, insbesondere aus Polyphenylensulfid (PPS).

Gemäß einer bevorzugten Ausführungsform des erfindungsgemäßen Verfahrens weisen die Trockeneispartikel, die z.B. als ein Produkt aus einem geraspeltem Trockeneisblock oder anderen größeren, geschabten oder vermahlenen Trockeneisprodukten erstellt werden können, einen Durchmesser im Bereich von 1 µm bis 5mm, vorzugsweise im Bereich von 0,05 mm bis 2 mm, auf.

Gemäß einer Ausführungsform der Erfindung kann Trockeneisschnee als Trockeneispartikel verwendet werden. Die Partikelgröße bei Trockeneisschnee liegt vorzugsweise in einem Größenbereich zwischen 1 µm und 500 µm, insbesondere in einem Bereich von 30 µm bis 300 µm.

Gemäß einer weiteren Ausführungsform der Erfindung können Trockeneispartikel in Form von Trockeneispellets verwendet werden. Die Partikelgröße bei Trockeneispellets liegt bevorzugt in einem Bereich von 0,3 mm bis 5 mm, insbesondere in einem Bereich von 1 mm bis 5 mm, insbesondere in einem Bereich von 1 mm bis 3 mm.

Gemäß einer Ausführungsform der Erfindung kann z.B. auch geraspeltes Trockeneis verwendet werden, das von einem Trockeneisblock abgeraspelt wird, wobei hier insbesondere die Trockeneispartikel in einem Größenbereich von 0,1 mm bis 1 mm liegen.

Weiterhin weisen die Trockeneispellets in Abhängigkeit des Pelletierers vorzugsweise eine Dichte im Bereich von 1,4 g/cm³ bis 1,7 g/cm³ auf, insbesondere ca. 1,56 g/cm³, sowie vorzugsweise eine Mohs-Härte im Bereich von ca. 1 bis 3 auf.

Weiterhin werden die Trockeneispartikel (z.B. Trockeneispellets) bevorzugt mit einer Geschwindigkeit im Bereich von 80 bis 350 m/s auf den Grat geschossen. Hierbei werden die Trockeneispartikel vorzugsweise mit einem Trägergas, insbesondere Druckluft, auf den Grat geschossen.

Durch ein Applizieren von kaltem, verflüssigtem Gas wird das Formteil idealerweise auf Temperaturen um den Glaspunkt des Materials des zu entgratenden Formteiles gebracht. Zumindest wird dadurch die Steifigkeit des Grates erhöht.

Mittels der Trockeneispartikel wird der durch das Vorkühlen versprödete Grat des Formteiles mechanisch abgetragen. Hierbei spielt der Impuls der einzelnen Trockeneispartikel (z.B. Trockeneispellets) eine Rolle. Dieser wird bestimmt durch die Geschwindigkeit sowie die Größe und Dichte der Trockeneispartikel bzw. durch deren Masse.

Zusätzlich wird durch die Verwendung der Trockeneispartikel beim Auftreffen auf den Grat weiterhin Wärme vom Grat in das jeweilige Partikel übertragen, so dass ein ausgeprägter Temperaturgradient und entsprechend hohe Scherkräfte im Grat entstehen, die das Abtragen des Grates unterstützen.

Schließlich entsteht durch die Sublimation der Trockeneispartikel (z.B. Trockeneispellets) beim Auftreffen gasförmiges CO₂, das im Vergleich zum festen Trockeneispartikel wesentlich mehr Volumen einnimmt. Diese explosionsartige Volumenzunahme erzeugt am Aufprallpunkt ebenfalls einen Impulseintrag in den Grat, der das Abtragen des Grates unterstützt.

Ein Vorteil des erfindungsgemäßen Verfahrens liegt insbesondere darin, dass nicht nur der Grat des Formteiles entfernt wird, sondern gleichzeitig das Formteil durch die Beaufschlagung mit Trockeneispartikeln gereinigt wird.

Gemäß einer weiteren bevorzugten Ausführungsform des erfindungsgemäßen Verfahrens handelt es sich bei dem verflüssigten Gas, das zum Vorkühlen bzw. Verspröden des Grates verwendet wird, um flüssigen Stickstoff.

Gemäß einer weiteren bevorzugten Ausführungsform des erfindungsgemäßen Verfahrens ist vorgesehen, dass zum Beaufschlagen des Grates mit dem verflüssigtem Gas eine Sprühdüse, insbesondere automatisch, entlang des Grates bewegt wird, und das verflüssigte Gas mittels der Sprühdüse auf den Grat gesprüht wird.

Gemäß einer weiteren bevorzugten Ausführungsform des erfindungsgemäßen Verfahrens ist vorgesehen, dass zum Beaufschlagen des Grates mit Trockeneispartikeln (z.B. Trockeneispellets) eine CO₂-Düse entlang des Grates bewegt wird und die Trockeneispartikel mittels der CO₂-Düse auf den Grat geschossen werden.

Weiterhin wird das der Erfindung zugrunde liegende Problem durch eine Einrichtung zum Entgraten von Formteilen, insbesondere Gummi-Formteilen, mit den Merkmalen des Anspruchs 9 gelöst.

Danach weist die erfindungsgemäße Entgratungseinrichtung ein Mittel auf, das dazu konfiguriert ist, den zu entfernenden Grat mit einem verflüssigten Gas zu beaufschlagen, insbesondere um den Grat vorzukühlen bzw. zu verspröden, sowie eine CO₂-Düse, die dazu eingerichtet ist, Trockeneispartikel (z.B. Trockeneispellets) auf den Grat zu schießen.

Das Mittel zum Beaufschlagen des Grates mit einem verflüssigtem Gas (insbesondere flüssiger Stickstoff, siehe oben) kann z.B. eine Sprühdüse aufweisen, die dazu konfiguriert ist, das verflüssigte Gas auf den zu entfernenden Grat zu sprühen.

Weiterhin ist gemäß einer bevorzugten Ausführungsform der erfindungsgemäßen Einrichtung vorgesehen, dass die Einrichtung eine Vorrichtung aufweist, die zum Speichern und/oder Erzeugen der Trockeneispartikel ausgebildet ist, wobei die Vorrichtung vorzugsweise mit der CO₂-Düse strömungsverbunden ist, so dass in der Vorrichtung gespeicherte und/oder erzeugte Trockeneispartikel über die CO₂-Düse auf den Grat schießbar sind. Vorzugsweise ist die Vorrichtung dazu ausgebildet, die Trockeneispartikel mittels eines Trägergases, insbesondere Druckluft, zum Grat hin zu beschleunigen.

Weiterhin ist bevorzugt vorgesehen, dass die Einrichtung eine Führung aufweist, die dazu ausgebildet ist, die CO₂-Düse entlang des zu entfernenden Grates zu bewegen. Die Einrichtung ist vorzugsweise dazu konfiguriert, hierbei den Grat mit den Trockeneispartikeln zu beaufschlagen. Die CO₂-Düse fährt dabei vorzugsweise den Grat in einem konstanten Abstand zum Grat ab.

Die Führung kann ferner auch dazu ausgebildet sein, die besagte Sprühdüse entlang des zu entfernenden Grates zu bewegen. Die Einrichtung ist vorzugsweise dazu konfiguriert, hierbei den Grat mit dem verflüssigten Gas (z.B. Stickstoff) zu besprühen. Die Sprühdüse fährt dabei ebenfalls vorzugsweise den Grat in einem konstanten Abstand zum Grat ab.

Es können natürlich auch separate Führungen für die Sprühdüse und die CO₂-Düse vorgesehen werden.

Weitere Merkmale und Vorteile der Erfindung sollen nachfolgend bei der Figurenbeschreibung von Ausführungsformen der Erfindung anhand der Figur erläutert werden. Es zeigt:

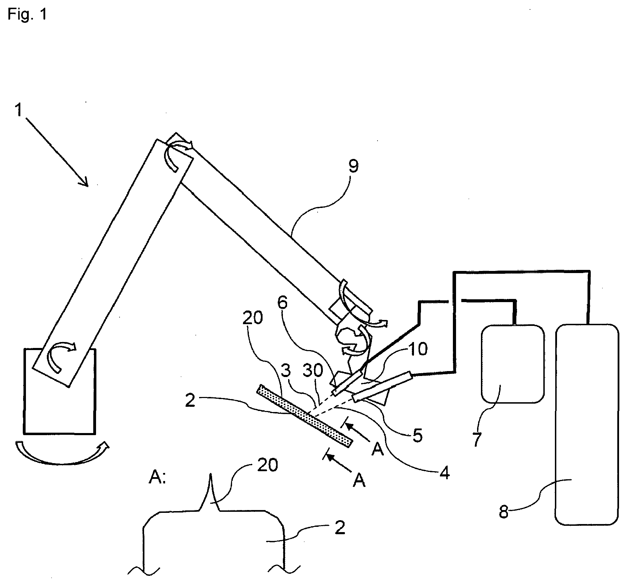

- Fig. 1: eine schematische Darstellung einer erfindungsgemäßen Einrichtung bzw. eines erfindungsgemäßen Verfahrens zum Entgraten eines Formteils, insbesondere Gummi-Formteils.

Figur 1 zeigt eine Einrichtung 1 zum Entgraten eines Formteiles 2, insbesondere in Form eines Gummi-Formteils 2, das vorliegend durch eine geeignete nicht gezeigte Haltevorrichtung festgehalten wird. Das Formteil 2 weist einen Grat 20 auf, der sich entlang des Formteils 2 erstreckt (vgl. Detail A) und zu entfernen ist.

Hierzu weist die Einrichtung 1 eine Sprühdüse 5 auf, die mit einem Speichertank 8 in Strömungsverbindung steht, in dem ein verflüssigtes Gas 4, insbesondere Stickstoff, gespeichert ist.

Die Sprühdüse 5 ist z.B. über einen Träger 10 mit einer Führung 9, hier in Form eines Roboterarms, gekoppelt, die dazu ausgebildet ist, die Sprühdüse 5 dreidimensional im Raum zu positionieren. Andere Führungen, auch händische, sind ebenfalls denkbar.

Die Führung 9 kann mit einer Steuer- oder Regeleinheit zusammenwirken, die die Führung 9 so regelt, dass die Sprühdüse 5 automatisch entlang des Grates 20 bewegt wird, wobei die Sprühdüse 5 bevorzugt einen im Wesentlichen konstanten Abstand zum Grat einhält.

Die Einrichtung 1 weist weiterhin zum Entfernen des Grates 20 eine CO₂-Düse 6 auf, die mit einer Vorrichtung 7 zur Speicherung und/oder Erzeugung von Trockeneispellets 3 strömungsverbunden ist. Die Vorrichtung 7 ist dazu ausgebildet, die Trockeneispartikel (z.B. Trockeneispellets) 3 mittels eines Trägergases 30 aus der CO₂-Düse 6 auszustoßen und auf den Grat 20 zu schießen.

Die CO₂-Düse 6 ist vorliegend ebenfalls (z.B. über den Träger 10) mit der Führung 9 gekoppelt, wobei die Führung 9 wiederum dazu ausgebildet ist, die CO₂-Düse 6 dreidimensional im Raum zu positionieren. Die Steuer- oder Regeleinheit regelt hierbei die Führung 9 so, dass die CO₂-Düse 6 automatisch entlang des Grates 20 bewegt wird, wobei die CO₂-Düse 6 ebenfalls bevorzugt einen im Wesentlichen konstanten Abstand zum Grat 20 einhält.

Zum Entfernen des Grates 20 des Formteiles 2, bei dem es sich zum Beispiel um eine Kfz-Dichtung handeln kann, wird nun zunächst die Sprühdüse 5 entlang des Grates 20 bewegt, wobei dieser mit einem verflüssigtem Gas 4, vorzugsweise flüssigem Stickstoff 4, besprüht wird, um den Grat 20 zu verspröden.

Die CO₂-Düse 6 kann in einem separaten Vorgang entlang des Grates 20 mittels der Führung 9 geführt werden, um den Grat 20 mit Trockeneispartikeln bzw. -pellets 3 zu beschießen. Es ist jedoch auch denkbar, die Sprühdüse 5 und die CO₂-Düse 6 gemeinsam in einem einzigen Vorgang entlang des Grates 20 zu verfahren, wobei die Sprühdüse 5 zunächst verflüssigtes Gas 4 auf den jeweiligen Gratabschnitt versprüht und der solchermaßen versprödete Gratabschnitt sodann mit Trockeneispartikeln bzw. -pellets 3 beschossen wird und der Grat 20 dabei abschnittsweise mechanisch abgetragen wird. Hierbei bewegt sich also die CO₂-Düse 6 der Sprühdüse 5 hinterher. Dies kann realisiert werden, indem die beiden Düsen 5, 6 z.B. starr an dem Träger 10 festgelegt werden und dieser mittels der Führung 9 entlang des Grates 20 bewegt wird, wobei die Sprühdüse 5 in der Bewegungsrichtung vor der CO₂-Düse 6 angeordnet ist, die also der Sprühdüse 5 nachgeführt wird.

### Beispiel

Gemäß einem Beispiel des erfindungsgemäßen Verfahrens beträgt der Druck der verwendeten Druckluft (Trägergas 30) 6 bar bei etwa 0,15 kg/min. Die

Trockeneispellets 3 (insgesamt 0,5 kg) werden auf den zuvor mit flüssigem Stickstoff (1,3 kg/min) versprödeten Grat 20 geschossen. Der flüssige Stickstoff weist dabei einen Druck von 1,5 bar auf und wird durch einen ca. 1,5 m langen Schlauch der Nennweite 6 mm an eine Sprühdüse zugeleitet, die mit einem Mundloch von 2,5 mm Durchmesser versehen ist. Die Behandlungsdauer zur Entfernung des etwa 0,5 m langen Grats 20 dauert hier in etwa 30-40 Sekunden ohne Handlingzeiten. Die beiden Düsen 5, 6 werden mit einer Geschwindigkeit von etwa 1 bis 2 m/min verfahren. Die hier genannten Parameter stellen lediglich ein Beispiel dar, andere Verfahrensbedingungen und -parameter sind ebenfalls möglich.

**Bezugszeichenliste**

| | |
|---|---|
| 1 | Einrichtung |
| 2 | Formteil |
| 3 | Trockeneispartikel |
| 4 | Verflüssigtes Gas |
| 5 | Sprühdüse |
| 6 | CO₂-Düse |
| 7 | Vorrichtung |
| 8 | Speichertank |
| 9 | Führung |
| 10 | Träger |
| 20 | Grat |
| 30 | Trägergas (z.B. Druckluft) |

## Patentansprüche

1. Verfahren zum Entgraten eines Formteiles (2), aufweisend die Schritte:
- Bereitstellen eines Formteiles (2), das einen zu entfernenden Grat (20) aufweist,
- Kühlen des Grates durch beaufschlagen des Grates (20) mit einem verflüssigtem Gas (4),
- Beaufschlagen des Grates mit Trockeneispartikeln (3) zur Entfernung des Grates (20).

2. Verfahren nach Anspruch 1, **dadurch gekennzeichnet, dass** die Trockeneispartikel (3) einen Durchmesser im Bereich von 1 µm bis 5mm aufweisen, insbesondere in einem Bereich von 0,05 mm bis 2 mm.

3. Verfahren nach Anspruch 1 oder 2, **dadurch gekennzeichnet, dass** die Trockeneispartikel (3) eine Dichte im Bereich von 1,4 g/cm³ bis 1,7 g/cm³ aufweisen.

4. Verfahren nach einem der vorhergehenden Ansprüche, **dadurch gekennzeichnet, dass** die Trockeneispartikel (3) mit einer Geschwindigkeit im Bereich von 80m/s bis 350m/s auf den Grat (20) geschossen werden.

5. Verfahren nach einem der vorhergehenden Ansprüche, **dadurch gekennzeichnet, dass** die Trockeneispartikel (3) mit einem Trägergas (30), insbesondere Druckluft, auf den Grat (20) geschossen werden.

6. Verfahren nach einem der vorhergehenden Ansprüche, **dadurch gekennzeichnet, dass** das verflüssigte Gas (4) flüssiger Stickstoff ist.

7. Verfahren nach einem der vorhergehenden Ansprüche, **dadurch gekennzeichnet, dass** zum Beaufschlagen des Grates (20) mit dem verflüssigtem Gas (4) eine Sprühdüse (5), insbesondere automatisch, entlang des Grates (20) bewegt wird, und das verflüssigte Gas mittels der Sprühdüse (5) auf den Grat (20) gesprüht wird.

8. Verfahren nach einem der vorhergehenden Ansprüche, **dadurch gekennzeichnet, dass** zum Beaufschlagen des Grates (20) mit Trockeneispartikeln (3) eine CO₂-Düse (6) entlang des Grates (20) bewegt wird, und die Trockeneispartikel (3) über die CO₂-Düse (6) auf den Grat (20) geschossen werden.

9. Einrichtung (1) zum Entgraten von Formteilen (2), mit
- einem Mittel (5), das dazu konfiguriert ist, den zu entfernenden Grat (20) mit einem verflüssigten Gas (4) zu beaufschlagen, und
- einer CO₂-Düse (6), die dazu konfiguriert ist, Trockeneispartikel (3) auf den Grat (20) zu schießen.

10. Einrichtung nach Anspruch 9, **dadurch gekennzeichnet, dass** die Einrichtung (1) eine Vorrichtung (7) zum Speichern und/oder Erzeugen der Trockeneispartikel (3) aufweist, wobei die Vorrichtung (7) mit der CO₂-Düse (6) verbunden ist, so dass in der Vorrichtung (7) gespeicherte und/oder erzeugte Trockeneispartikel (3) über die CO₂-Düse (5) auf den Grat (20) schießbar sind, und wobei insbesondere die Vorrichtung (7) dazu ausgebildet ist, die Trockeneispartikel (3) mittels eines Trägergases (30), insbesondere Druckluft, auf den Grat (20) zu schießen.

11. Einrichtung nach Anspruch 9 oder 10, **dadurch gekennzeichnet, dass** die Einrichtung (1) eine Führung (9) aufweist, die dazu ausgebildet ist, die CO₂-Düse (6) entlang des zu entfernenden Grates (20) zu bewegen.
